# FASCICULE DE BREVET EUROPEEN

(11) **EP 0 812 419 B1**
(45) Date de publication et mention de la délivrance du brevet: **09.02.2000**
(21) Numéro de dépôt: 96943196.4
(22) Date de dépôt: 24.12.1996
(51) Int. Cl.: G21C 17/017

(54) **DISPOSITIF ET PROCEDE DE CONTROLE DE TUBES PAR COURANTS DE FOUCAULT**
VERFAHREN UND VORRICHTUNG ZUM KONTROLLE VON RÖHREN MITTELS WIRBELSTRÖMEN
DEVICE AND METHOD FOR EDDY CURRENT TESTING OF TUBES

(30) Priorité: 29.12.1995 FR 9515737
(43) Date de publication de la demande: 17.12.1997
(73) Titulaire: FRAMATOME, 92400 Courbevoie (FR); COMPAGNIE GENERALE DES MATIERES NUCLEAIRES, 78140 Velizy Villacoublay (FR)
(72) Inventeur: BOUR, Denis, F-69003 Lyon (FR); DUCARME, Stéphane, F-71100 Chalon-sur-Saône (FR)
(74) Mandataire: Fort, Jacques
(86) Numéro de dépôt international: FR9602080
(87) Numéro de publication internationale: WO9724611

(56) Documents cités:
- EP-A- 0 100 009
- FR-A- 881 643
- FR-A- 2 585 869
- GB-A- 1 030 687
- US-A- 5 017 869
- JOURNAL OF APPLIED PHYSICS, 1 NOV. 1986, USA, vol. 60, no. 9, ISSN 0021-8979, pages 3327-3334, XP002013075 KIM Y -J ET AL: "Eddy current test of steel tube employing electromagnet technique for DC magnetization"

## Description

La présente invention concerne le contrôle de tubes métalliques par courants de Foucault et elle trouve une application particulièrement importante, bien que non exclusive, dans le contrôle des tubes de gainage de crayons contenant un matériau absorbant les neutrons ou fertile destinés aux grappes de commande de réacteur nucléaire.

On connaît déjà (FR-A-2 585 869) un procédé de contrôle par courants de Foucault de crayons de grappes de commande utilisant des bobines à travers lesquelles on fait passer les crayons. Ces bobines sont alimentées par un courant à haute fréquence. L'analyse de la tension aux bornes des bobines représentative de l'impédance permet d'évaluer l'usure des tubes.

Cette solution donne des résultats satisfaisants lorsque les tubes sont homogènes, par exemple en acier inoxydable. En revanche, elle n'est plus fiable si elle met en oeuvre les bobines habituelles lorsque les tubes ont une couche superficielle externe dont les caractéristiques magnétiques ou électriques sont notablement différentes de celles du métal de base, par exemple parce que les tubes ont été soumis à un traitement de surface destiné à réduire leur usure.

Ce cas se présente notamment lorsque les tubes sont en acier et ont une couche superficielle, de 10 µm à quelques dizaines de µm d'épaisseur, enrichie en azote, obtenue par décharge électrique dans une atmosphère raréfiée contenant de l'azote (nitruration ionique) et qui est de nature ferromagnétique, ou de chrome, donc la conductivité électrique est environ six fois supérieure à celle du métal de base.

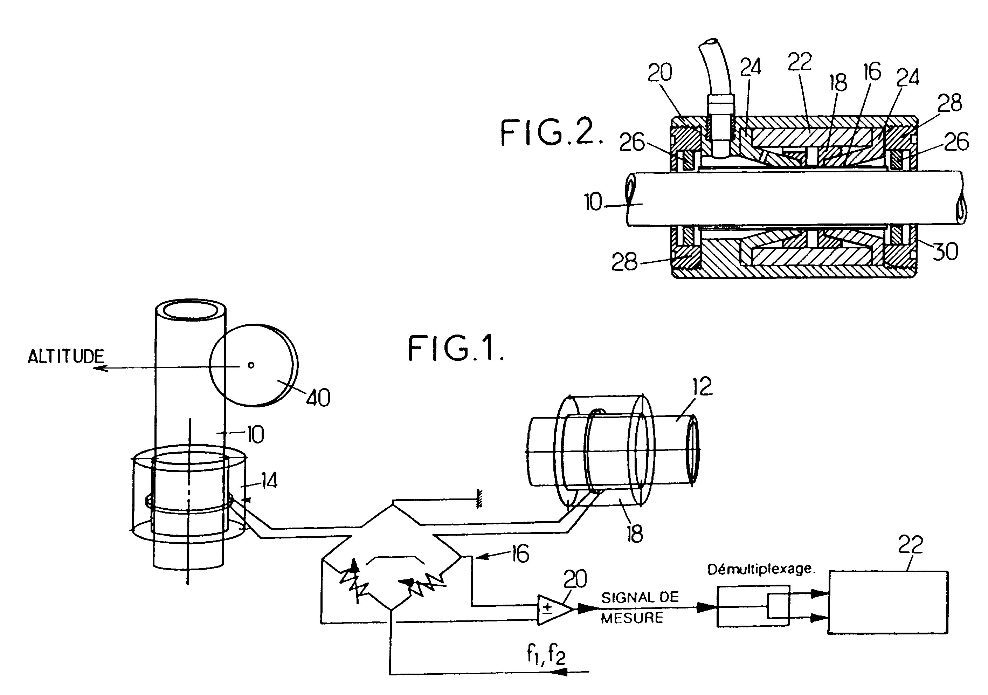

On connait également (FR-A-881 643) un dispositif d'examen non destructif de pièces en métal ferromagnétique. Pour cela, le dispositif explore la pièce au moyen d'un champ magnétique périodique et observe les courants induits dans une bobine de mesure. Le champ magnétique périodique est créé par un aimant inducteur tournant (figure 2), par une bobine inductrice parcourue par un courant alternatif (figure 7). Il n'est jamais envisagé un dispositif comportant à la fois l'un et l'autre.

Un autre dispositif connu (GB-A-1 030 687) comporte un aimant annulaire placé entre des flasques de fermeture d'un circuit magnétique à travers un tube à examiner, et une bobine centrale alimentée en courant alternatif et deux bobines latérales de détection.

L'invention vise notamment à fournir un procédé et un dispositif de contrôle répondant mieux que ceux antérieurement connus aux exigences de la pratique.

Dans ce but l'invention propose notamment un dispositif de contrôle suivant la revendication 1.

Dans un mode avantageux de réalisation chacun des guides est en forme d'anneau présentant une partie externe en appui contre une face terminale de l'aimant et une partie interne qui converge vers l'autre guide et se termine à proximité immédiate de la bobine et sensiblement au même niveau qu'elle dans le sens radial.

Lesdits moyens d'alimentation comportent généralement un oscillateur permettant d'alimenter la bobine à une fréquence variable de 100 kHz à au moins 4 MHz.

Suivant un autre aspect de l'invention, cette dernière propose également un procédé de contrôle par courants de Foucault de tubes métalliques suivant la revendication 10.

L'invention vise également, à titre subsidiaire, à permettre de déceler par courants de Foucault, au cours d'une même passe de mesure ou en deux passes successives, les variations, le long du tube du jeu existant entre le tube et un matériau qu'il contient.

Pour cela les moyens d'alimentation sont prévus pour alimenter la bobine, à la première fréquence pour détecter les jeux internes entre les matériaux absorbants et le tube, et à une seconde fréquence, supérieure à 4 MHz, pour détecter les variations géométriques du tube et les fissures du tube.

Un tel dispositif est notamment utilisable pour contrôler des crayons comportant un tube externe en acier ayant une couche superficielle nitrurée ou chromée et contenant une colonne de matériau absorbant.

La bobine de mesure peut être placée de façon classique dans une des branches d'un pont de Wheatstone dont une autre branche comporte une bobine de référence (18) entourant un tronçon de tube étalon. Une des diagonales du pont est reliée à des moyens d'alimentation à haute fréquence et l'autre diagonale est reliée, par l'intermédiaire d'un amplificateur, à un démultiplexeur alimentant deux circuits d'exploitation affectés chacun à une fréquence différente.

Les caractéristiques ci-dessus ainsi que d'autres apparaîtront mieux à la lecture de la description qui suit d'un mode particulier de réalisation, donné à titre d'exemple non limitatif. La description se réfère aux dessins qui l'accompagnent, dans lesquels :
- la figure 1 est un schéma de principe montrant un montage d'examen de tube par courants de Foucault ;
- la figure 2 montre une tête de mesure par courants de Foucault conforme à un mode particulier de réalisation de l'invention ;
- la figure 3 est une vue en coupe schématique de la partie basse d'un crayon de grappe de contrôle contenant le matériau absorbant, faisant apparaître l'existence de deux jeux différents ;
- la figure 4 est une vue en perspective montrant une répartition possible des têtes de mesure dans un dispositif de contrôle des tubes de gainage de crayons d'une grappe de commande de réacteur nucléaire.

Le contrôle d'un tube 10 par courants de Foucault s'effectue classiquement par comparaison entre le tube 10 et un tronçon de tube de référence ou étalon 12, ne comportant pas de défaut, comme le montre la figure 1. Le tube 10 à contrôler est déplacé le long d'une tête contenant une bobine de mesure 14 placée dans une branche d'un pont de Wheatston 16 dont une diagonale est alimentée en courant alternatif à haute fréquence. Une autre branche du pont contient une bobine de référence 18 encerclant le tronçon de tube étalon 12. La tension de mesure est prélevée sur l'autre diagonale du pont et elle est appliquée à un amplificateur différentiel de mesure 20 dont la sortie est numérisée, puis traitée par un organe de calcul 22.

Plusieurs bobines de mesure peuvent utiliser la même bobine de référence grâce à des circuits de connexion adaptés.

Pour déceler les défauts de tubes minces en acier, on alimente généralement le pont sous une tension alternative à une fréquence comprise entre plusieurs centaines de Khz et quelques MHz.

Pour écarter les problèmes posés par l'existence d'une couche ou pellicule superficielle ayant des caractéristiques différentes de celles du métal de base, la tête de mesure peut avoir la constitution montrée en figure 2. La bobine 14 est enroulée, autour d'un tube de protection 16, dans un support de bobine 18. Elle est enfermée dans un corps 20 qui peut être en matériau isolant et contient un aimant annulaire 22. Le circuit magnétique de cet aimant se referme par deux guides de flux 24 en matériau à forte perméabilité magnétique, même à induction élevée, par exemple en ferrite.

Chacun des deux guides est en forme d'anneau. Il présente une partie externe en forme de disque, en appui contre une tranche terminale de l'aimant annulaire 22 et une partie interne. Cette dernière converge vers l'autre guide et se termine à proximité immédiate de la bobine et sensiblement de niveau avec elle dans le sens radial. Une brêche subsiste entre les parties internes. Sa largeur est au moins égale à celle de la bobine.

La tête comporte également des éléments destinés à protéger la bobine 18 en cas de passage d'un tube déformé ou renflé et à centrer le tube.

Dans le cas représenté en figure 2, ces éléments comportent deux brosses de centrage 26, par exemple en matériau plastique légèrement souple, monté dans une bague rigide 28, par exemple en acier inoxydable. Chaque bague 28 peut comporter un rebord interne 30 de diamètre légèrement supérieur au diamètre nominal du tube à inspecter, réduisant le risque d'endommagement de la bobine par une zone gonflée du tube, en arrêtant celui-ci.

L'aimant annulaire 22 et les guides de flux 24 sont choisis en fonction des caractéristiques de la couche superficielle, de façon à saturer magnétiquement cette dernière. Si par exemple le tube est en acier inoxydable nitruré en surface, l'aimant et les guides sont choisis de façon que le champ magnétique à proximité immédiate de la bobine y soit maximum.

Cette disposition permet de concentrer le flux dans un volume utile réduit, tout en conservant une bobine optimisée de façon à pouvoir fonctionner sur une bande de fréquence large, allant par exemple de 100 KHz à 4 MHz dans le cas évoqué plus haut de tubes en acier inoxydable présentant une pellicule externe nitrurée sur une profondeur de 10 à 20 µm.

On peut par exemple faire un contrôle à une fréquence f1 d'environ 4 MHz pour détecter les usures anormales et les fissures et à une fréquence f2 = 400 KHz, permettant de déceler les variations brutales du jeu entre le tube et un élément métallique qu'il contient (provoqué par l'utilisation d'un élément dont le diamètre est volontairement réduit localement) ou des variations progressives dues à des gonflements.

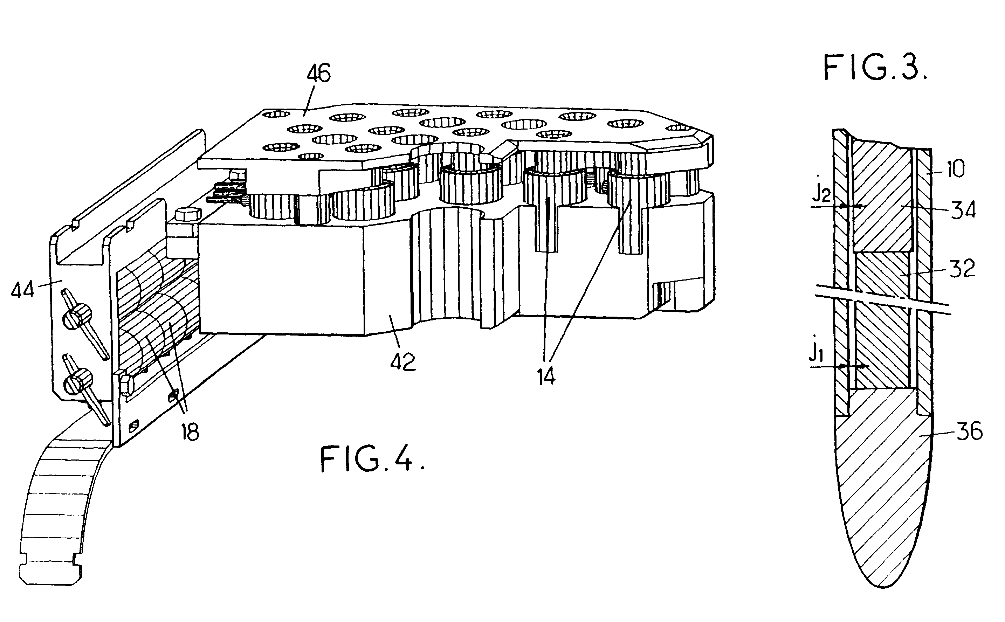

L'examen des tubes avec une fréquence f2 relativement basse, permet par exemple de détecter le niveau de la transition entre une colonne d'absorbant 32, ayant un premier diamètre et une colonne d'absorbant 34 ayant un autre diamètre, à l'intérieur d'un tube de gainage 10 (figure 3). L'impédance de la bobine de mesure, lorsqu'elle est alimentée à une fréquence suffisamment basse pour que les courants de Foucault pénètrent en profondeur, est une fonction du jeu entre l'élément interne et le tube. La relation entre les deux peut être déterminée par étalonnage préalable sur un tube de référence, contenant un élément de diamètre décroissant par étapes. Le signal obtenu à la fréquence basse est déphasé de 90°, contrairement à la composante du signal de sortie due à l'usure ou à des défauts de la gaine.

Les emplacements des défauts dans le sens longitudinal, à partir de l'ogive terminale 36 d'un tube de gainage, et l'emplacement des transitions entre le jeu j1 et le jeu j2 peuvent être déterminés en mesurant le déplacement du tube 10 à l'aide d'un capteur d'altitude comprenant par exemple une roue 40 en appui contre le crayon ou contre un autre crayon se déplaçant en même temps que lui. L'examen d'un tube peut s'effectuer simultanément aux deux fréquences fl et f2 en injectant, dans le pont 16, les deux fréquences à la fois et en les séparant, à la sortie de l'amplificateur 20, dans un démultiplexeur.

Il est également possible d'effectuer une mesure à une troisième fréquence intermédiaire entre fl et f2. Le signal obtenu permet, par comparaison avec des signaux de référence obtenus sur des tronçons ayant des usures ou des défauts de type connu, de préciser la nature des défauts décelés à la fréquence f1.

L'invention est notamment utilisable pour contrôler les tubes de gainage des crayons d'une grappe de commande de réacteur nucléaire, en mettant en oeuvre un appareillage du genre décrit dans le document FR-A-2 585 869. Pour contrôler les vingt quatre crayons d'une même grappe de commande en deux passes seulement, le dispositif peut être prévu pour inspecter douze crayons à la fois. Les têtes 14 contenant les douze bobines de mesure sont placées sur un corps de panier 42 (figure 4). Ce corps est fixé sur un châssis 44 portant les bobines de référence 18 enfilées sur un, deux ou trois tronçons de tube. Un couvercle 46 comporte des prolongements tubulaires qui s'insèrent dans les têtes de mesure et centrent les tubes lors de leur circulation. Les têtes de mesure sont montées flottantes dans le panier 42 pour tolérer un écart des crayons par rapport à leur position nominale.

L'analyse d'un groupe de douze crayons d'une grappe de commande ou plus généralement d'un groupe de n/m crayons (où n est le nombre total des crayons de la grappe et m est un nombre entier sous-multiple de n) peut s'effectuer de la façon suivante.

L'organe de traitement des signaux comportant autant de voies qu'il y a de crayons à contrôler simultanément, ces voies sont tout d'abord calibrées. Puis on fait circuler la grappe de façon que les crayons passent sur toute leur longueur dans les bobines de mesure, alimentées au moins à la première fréquence f1. Les valeurs numérisées des tensions de sortie des ponts de mesure sont enregistrées en même temps que l'altitude des crayons, mesurée sur un seul d'entre eux. En temps différé, l'analyse des signaux de sortie enregistrés permet de déterminer le taux d'usure à chacun des niveaux et de déterminer quelles sont les zones des crayons sur lesquelles une analyse plus fine, par exemple par ultra-sons, doit être effectuée. Cet examen par ultra-sons peut être effectué à l'aide d'une tête de mesure mobile pour venir se placer sur le trajet d'un quelconque des crayons qui ne sont pas en cours d'examen par courants de Foucault, pouvant comporter une sonde pouvant tourner autour du crayon dans un porte-sonde pour faire une cartographie de la périphérie à un niveau déterminé.

Dans une variante de réalisation, un examen par ultra-sons est effectué en même temps que l'examen par courants de Foucault, mais les signaux obtenus par examen ultra-sonore ne sont analysés que dans les zones indiquées comme douteuses par l'examen par courants de Foucault.

La détermination du niveau des transitions entre jeux peut s'effectuer simultanément ou séparément. En général, il suffira d'effectuer cette détermination de l'emplacement des transitions sur une fraction seulement (souvent la partie basse) des crayons.

## Revendications

1. Dispositif de contrôle par courants de Foucault de tubes métalliques (10) comportant une tête de mesure ayant une bobine de mesure (14) destinée à encercler un tube et des moyens pour alimenter la bobine en tension à haute fréquence, supérieure à 100 kHz, et pour analyser l'impédance de la bobine, caractérisé en ce que ce dispositif est destiné au contrôle de tubes présentant sur leur face externe une couche mince de caractéristiques magnétiques ou électriques différentes de celles du métal en profondeur et ladite tête contient un aimant annulaire (22) entourant la bobine et des guides de flux magnétique (24) en matériau de perméabilité élevée, encadrant la bobine dans le sens axial et constituant avec l'aimant un circuit magnétique, les guides convergeant l'un vers l'autre et vers la bobine pour créer un champ magnétique dont l'intensité est maximale à l'intérieur de la bobine et à proximité de celle-ci.

2. Dispositif selon la revendication 1, caractérisé en ce que chacun des guides (24) est en forme d'anneau présentant une partie externe en appui contre l'aimant et une partie interne qui converge vers l'autre guide et se termine à proximité immédiate de la bobine et sensiblement au même niveau qu'elle dans le sens radial.

3. Dispositif selon la revendication 1 ou 2, caractérisé en ce que la tête est en forme de manchon et porte à ses extrémités, dans le sens axial, des brosses (26) de centrage du tube dans la tête.

4. Dispositif selon la revendication 3, caractérisé en ce que chaque brosse (26) est associée à une bague (28) percée d'un trou de passage, de diamètre légèrement supérieur au diamètre nominal des tubes à examiner de façon à protéger la bobine et les guides contre l'introduction d'un tube gonflé.

5. Dispositif selon l'une quelconque des revendications 1 à 4, caractérisé en ce que lesdits moyens comportent un oscillateur permettant d'alimenter la bobine à une fréquence variable de 100 kHz à au moins 4 MHz.

6. Dispositif selon l'une quelconque des revendications 1 à 5, dont la bobine de mesure à une dimension lui permettant de recevoir un crayon de grappe de commande pour réacteur nucléaire, caractérisé en ce que lesdits moyens sont prévus pour alimenter la bobine,
à une première fréquence comprise entre 100 kHz et 500 kHz
et
à une seconde fréquence, supérieure à 4 MHz.

7. Dispositif selon la revendication 6, caractérisé en ce que lesdits moyens sont prévus pour alimenter la bobine à une troisième fréquence, comprise entre les deux premières.

8. Dispositif selon l'une quelconque des revendications 5 à 7, caractérisé en ce que ladite bobine est placée dans l'une des branches d'un pont de Wheatstone dont une autre branche comporte une bobine de référence (18) entourant un tronçon de tube étalon (12), en ce que l'une des diagonales du pont est reliée à des moyens d'alimentation à haute fréquence et en ce que l'autre diagonale est reliée, par l'intermédiaire d'un amplificateur (20), à un démultiplexeur alimentant deux circuits d'exploitation affectés chacun à une fréquence différente.

9. Dispositif selon l'une quelconque des revendications 1 à 8, caractérisé en ce que plusieurs têtes de mesure chacune dimensionnée pour recevoir un tube sont montées flottantes dans un même panier.

10. Procédé de contrôle par courants de Foucault de tube métallique présentant sur sa face externe une couche mince de caractéristiques magnétiques ou électriques différentes de celles du métal en profondeur, suivant lequel on alimente une bobine encerclant le tube par une première tension à une fréquence comprise entre 100 kHz et 500 kHz pour détecter les jeux internes entre le tube métallique et son contenu et par une seconde tension à une fréquence supérieure à 4 MHz pour détecter les variations géométriques du tube et ses fissures, on soumet en même temps l'emplacement du tube à l'intérieur de la bobine à un champ magnétique continu suffisant pour saturer magnétiquement ladite couche mince et on analyse la tension aux bornes de la bobine pour mesurer son impédance.

11. Procédé selon la revendication 10, caractérisé en ce que l'on enregistre les variations de la tension en fonction du déplacement du crayon pour déterminer les zones douteuses qui sont ultérieurement soumises à un examen par un autre procédé.

## Patentansprüche

1. Vorrichtung zur Kontrolle mittels Wirbelströmen von metallischen Rohren (10) mit einem Meßkopf, der eine Meßspule (14) aufweist, die dazu dient, ein Rohr zu umfassen und mit Einrichtungen zum Speisen der Spule mit Hochfrequenzspannung, höher als 100 kHz und zum analysieren der Impedanz der Spule, wobei die Vorrichtung zur Kontrolle des Rohres dient und an ihrer Außenseite eine dünne Schicht von magnetischen und elektrischen Eigenschaften aufweist, die unterschiedlich sind zu jenen des tieferliegenden Metalls, und dadurch gekennzeichnet ist, daß der Kopf einen ringförmigen Magneten (22) enthält, der die Spule umgibt und Magnetflußführungen (24) enthält aus einem Material von erhöhter Durchlässigkeit, die die Spule in axialer Richtung einrahmen und mit dem Magneten einen magnetischen Kreis bilden, wobei die Führungen zueinander und zur Spule konvergieren, um ein Magnetfeld zu schaffen, dessen Intensität bzw. Stärke im Inneren der Spule und in der Nähe von dieser maximal ist.

2. Vorrichtung nach Anspruch 1, dadurch gekennzeichnet, daß eine jede der Führungen (24) die Form eines Rings aufweist, der einen Außenabschnitt in Anlage gegen den Magneten und einen Innenabschnitt aufweist, der zu der anderen Führung konvergiert und in der unmittelbaren Nähe der Spule und im wesentlichen auf der selben Höhe wie diese in radialer Richtung endet.

3. Vorrichtung nach Anspruch 1 oder 2, dadurch gekennzeichnet, daß der Kopf die Form einer Muffe aufweist und an seinen Enden in axialer Richtung Zentrierungsbürsten (26) des Rohres in dem Kopf aufweist.

4. Vorrichtung nach Anspruch 3, dadurch gekennzeichnet, daß eine jede Bürste (25) einem Ring (28) zugeordnet ist, der mit einer Durchtrittsöffnung versehen ist, von einem Durchmesser, der leicht größer ist als der nominale Durchmesser der zu untersuchenden Rohre, derart, daß die Spule und die Führungen gegen das Einführen eines aufgeblasenen Rohres geschützt werden.

5. Vorrichtung nach einem der Ansprüche 1 bis 4, dadurch gekennzeichnet, daß die Einrichtungen einen Oszillator aufweisen, der ermöglicht die Spule mit einer variablen Frequenz zwischen 100 kHz bis zu wenigstens 4 MHz zu versehen.

6. Vorrichtung nach einem der Ansprüche 1 bis 5, bei der die Meßspule eine Abmessung aufweist, die ihr ermöglicht, einen Steuergreiferbrennstab für Kernreaktoren aufzunehmen, dadurch gekennzeichnet, daß die Einrichtungen dazu vorgesehen sind, die Spule zu speisen bei einer ersten Frequenz zwischen 100 kHz und 500 kHz und einer zweiten Frequenz, die größer als 4 Mhz ist.

7. Vorrichtung nach Anspruch 6, dadurch gekennzeichnet, daß die Einrichtungen vorgesehen sind, um die Spule bei einer dritten Frequenz zu speisen, die zwischen den beiden ersten liegt.

8. Vorrichtung nach einem der Ansprüche 5 - 7, dadurch gekennzeichnet, daß die Spule in einem der Arme einer Wheatstone'schen Brücke gesetzt ist, von der ein weiterer Arm eine Referenzspule (18) aufweist, die ein Stück des Eichrohres (12) umgibt, daß eine der Diagonalen der Brücke mit Hochfrequenzspeiseeinrichtungen verbunden ist, und daß die andere Diagonale über einen Verstärker (20) mit einem Demultiplexer verbunden ist, der zwei Nutzschaltkreise speist, von denen jeder mit einer unterschiedlichen Frequenz beaufschlagt wird.

9. Vorrichtung nach einem der Ansprüche 1 - 8, dadurch gekennzeichnet, daß mehrere Meßköpfe schwimmend in dem selben Korb angebracht sind, wobei jeder so bemessen ist, daß er ein Rohr aufnehmen kann.

10. Verfahren zur Kontrolle eines metallischen Rohres, das an seiner Außenseite eine dünne Schicht von magnetischen und elektrischen Eigenschaften aufweist, die unterschiedlich sind zu jenen des tieferliegenden Metalls, gemäß dem eine Spule gespeist wird, die das Rohr umgibt, mit einer ersten Spannung bei einer Frequenz zwischen 100 kHz und 500 kHz, um die inneren Spiele zwischen dem Metallrohr und seinem Inhalt zu erfassen, und mit einer zweiten Spannung bei einer Frequenz größer als 4 MHz, um die geometrischen Veränderungen des Rohres und seine Risse zu erfassen, wobei gleichzeitig der Ort des Rohres im Inneren der Spule einem kontinuierlichen magnetischen Feld unterworfen wird, das ausreicht um magnetisch die dünne Schicht zu sättigen und die Spannung an den Anschlüssen der Spule analysiert wird, um ihre Impedanz zu messen.

11. Verfahren nach Anspruch 10, dadurch gekennzeichnet, daß die Veränderungen der Spannung in Abhängigkeit der Bewegung des Stabes erfaßt werden, um die zweifelhaften Zonen zu bestimmen, die zusätzlich einer Untersuchung durch ein weiteres Verfahren unterworfen werden.

## Claims

1. Apparatus for eddy current inspection of metal tubes (10), comprising a measurement head having a measurement coil (14) for surrounding a tube and means for powering the coil with voltage at high frequency, greater than 100 kHz, and for analyzing the impedance of the coil,
characterized in that the apparatus is for inspecting tubes having a thin layer on their outside face with magnetic or electrical characteristics that are different from those of the metal in-depth and said head contains an annular magnet (22) surrounding the coil and magnetic flux guides (24) of material having a high permeability value axially straddling the coil in the axial direction and constituting with the magnet a magnetic circuit, the guides converging towards each other and towards the coil for generating a magnetic field whose maximum intensity lies radially inside the coil and close thereto.

2. Apparatus according to claim 1, characterized in that each of the guides (24) is in the form of a ring having an external portion bearing against the magnet and an internal portion converging towards the other guide and terminating in the immediate vicinity of the coil and substantially at the same level as the coil in the radial direction.

3. Apparatus according to claim 1 or 2, characterized in that the head is in the form of a sleeve and carries brushes (26) at its axial ends for centering the tube within the head.

4. Apparatus according to claim 3, characterized in that each brush (26) is associated with a ring (28) formed with a through hole of diameter slightly greater than the nominal diameter of the tubes to be examined so as to protect the coil and the guides against insertion of a swollen tube.

5. Apparatus according to any one of claims 1 to 4, characterized in that said means comprise an oscillator enabling the coil to be powered at a frequency that is variable in the range 100 kHz to at least 4 MHz.

6. Apparatus according to anyone of claims 1-5, whose measuring coil has a size enabling it to receive a rod of a nuclear reactor control cluster, characterized in that said means are provided for powering the coil:
at a first frequency lying in the range 100 kHz to 500 kHz ; and
at a second frequency greater than 4 MHz.

7. Apparatus according to claim 6, characterized in that said means are provided for powering the coil at a third frequency lying between the first two frequencies.

8. Apparatus according to any one of claims 5 to 7, characterized in that said coil is placed in one of the branches of a Wheatstone bridge whose other branch includes a reference coil (18) surrounding a length of standard tube (12), in that one of the diagonals of the bridge is connected to means for powering it at high frequency, and in that the other diagonal is connected via an amplifier (20) to a demultiplexer feeding two processing circuits each operating at a different frequency.

9. Apparatus according to any one of claims 1 to 8, characterized in that a plurality of measurement heads each sized for receiving one tube are movably mounted relative to a common jig.

10. A method of using eddy currents to inspect a metal tube having, on its outside face, a thin layer of magnetic or electrical characteristics that are different from those of the metal in depth, in which a coil surrounding the tube is powered by a first voltage at high frequency, comprised between 100 kHz and 500 kHz for detecting internal clearances between the metal tube and the content thereof, and a second voltage at a frequency higher than 4 MHz for detecting geometrical variations and cracks in the tube and the part of the tube within the coil is simultaneously subjected to a DC magnetic field that is of sufficient strength to saturate said thin layer magnetically, and the voltage across the terminals of the coil is analyzed to measure the impedance thereof.

11. A method according to claim 10, characterized in that variations in the voltage are recorded as a function of rod displacement in order to determine doubtful zones that are subsequently subjected to examination by an other method.
